**Europäisches Patentamt**

**European Patent Office**

**Office européen des brevets**

(19)

(11) Numéro de publication : **0 473 477 A1**

# (12) DEMANDE DE BREVET EUROPEEN

(21) Numéro de dépôt : **91402139.9**

(22) Date de dépôt : **30.07.91**

(51) Int. Cl.⁵ : **C09D 5/00,** G02B 5/12, E01F 9/04

(30) Priorité : **08.08.90 FR 9010128**

(43) Date de publication de la demande : **04.03.92 Bulletin 92/10**

(84) Etats contractants désignés : **AT BE CH DE DK ES FR GB GR IT LI LU NL SE**

(71) Demandeur : **MEAC S.A.**
**31, rue Nicole, B.P. 371**
**F-28000 Chartres Cédex (FR)**

(72) Inventeur : **Caillet-Muller, Armelle**
**2 Rue de Mai**
**F-27200 Vernon (FR)**
Inventeur : **Lefevre, Daniel**
**7 ter Rue Baratte-Cholet**
**F-94200 Saint Maur (FR)**

(74) Mandataire : **Derambure, Christian et al**
**Cabinet Bouju Derambure (Bugnion) S.A. 55, rue Boissonade**
**F-75014 Paris (FR)**

(54) **Matériau produisant un effet lumineux et sa mise en oeuvre.**

(57)    Matériau produisant un effet lumineux comprenant :
— des paillettes ou micro-paillettes d'au moins un matériau apte à produire un effet lumineux choisi dans le groupe comprenant : les résines crylique - polyester sous forme de film, les micos, les mica-titane ou équivalent ;
— au moins un liant ;
— au moins un épaississant ;
— de l'eau.
Le matériau est utilisable appliqué sur un matériau de traçage du sol pour permettre un effet visible à la lumière extérieure notamment provenant de projecteurs de lumière.

EP 0 473 477 A1

Jouve, 18, rue Saint-Denis, 75001 PARIS

L'invention concerne un matériau produisant un effet lumineux ainsi que sa mise en oeuvre.

On connaît et utilise déjà des matériaux de traçage du sol destinés à réaliser des marques tels que des lignes sur des sols herbeux ou non tels que ceux des terrains de sport ou de jeux. Un cas typique est celui des marques d'un terrain de football. Dans ce cas on peut souhaiter que les marques ainsi réalisées soient visibles y compris lorsque les matches se font en nocturne, le terrain de football étant éclairé au moyen de puissants projecteurs de lumière.

Selon le document US-A-4 004 930, il est divulgué un revêtement réflecteur pour des casques, des plots. La composition est à base de lamelles réflectrices et de microsphères dispersées dans un excipient liquide. Ce document concerne donc un domaine étranger à celui objet de la présente invention.

Selon le document JP-A-59030868, il est révélé la constitution d'un film ayant des propriétés réflectrices.Le film est à base de perles transparentes, de paillettes de pigments translucides et d'adhésifs.

Le document DE-A-2 908 909 concerne la composition d'un produit enduit d'un support réflecteur déstiné aux piétons.

L'invention vise à résoudre ce problème. Elle a donc pour objet un matériau produisant un effet lumineux. Elle a aussi pour objet la mise en oeuvre d'un tel matériau. Cette mise en oeuvre consiste, notamment dans la réalisation considérée, à appliquer d'abord sur le sol un matériau de traçage tel qu'il a été mentionné puis à appliquer le matériau produisant l'effet lumineux.

Un matériau selon l'invention comprend - ou en variante est constitué essentiellement par - les constituants suivants :

- des paillettes ou micro-paillettes d'au moins un matériau apte à produire un effet lumineux choisi dans le groupe comprenant : les résines acrylique - polyester sous forme de film, les micas, les mica-titane, la nacre ou équivalent ;
- au moins un liant ;
- au moins un épaississant ;
- de l'eau.

Selon une réalisation plus spécialement considérée, le matériau comprend :

- des paillettes ou micro-paillettes d'au moins un matériau apte à produire un effet lumineux choisi dans le groupe comprenant : les résines acrylique - polyester sous forme de film, les mica, les mica-titane, la nacre ou équivalent ;
- au moins un liant cellulosique, acrylique ou équivalent ;
- au moins un épaississant ;
- de l'eau ;

ces constituants étant sélectionnés qualitativement et quantitativement pour que le matériau soit substantiellement transparent, ce qui permet de combiner l'effet lumineux qu'il produit avec le marquage réalisé par le matériau de traçage placé en dessous.

Dans cette réalisation, le matériau comprend en outre un ou des agent (s) dispersant (s), et/ ou bactéricide (s), et/ ou produit (s) antimousse . Il comprend en outre au moins une base telle que le pH soit ajusté entre 8 et 9,5 environ.

Les autres caractéristiques, variantes, avantages et propriétés de l'invention résulteront de la description qui suivra de plusieurs formes possibles de réalisation non limitatives.

L'invention concerne un matériau produisant un effet lumineux ainsi que la mise en oeuvre d'un tel matériau.

Ce matériau est plus spécialement destiné à être fonctionnellement combiné à un matériau de traçage du sol, une telle combinaison matériau de traçage + matériau produisant un effet lumineux faisant partie de l'invention.

Un tel matériau de traçage du sol permet de réaliser des traces visibles, blanches ou colorées, sur les sols notamment herbeux de terrains de sport ou de jeux.

Un tel matériau de traçage peut faire l'objet de différentes variantes de composition. Dans la réalisation considérée ayant donné de bons résultats avec la réalisation de matériau produisant l'effet lumineux décrite, le matériau de traçage du sol comprend de l'ordre de 20% à 70% en poids d'une suspension aqueuse de charge minérale à base essentiellement de particules de carbonate de calcium ou équivalent dont au moins une partie notable de celles-ci a un diamètre statistique moyen au plus de l'ordre de 2 microns et une charge de particules compatibles avec celles de carbonate de calcium ou équivalent et dont au moins une partie notable de celles-ci a un diamètre statistique moyen au moins de l'ordre de 5 microns.

Plus particulièrement, le matériau de traçage comprend de l'ordre de 45% à 70% en poids d'une suspension aqueuse de charge minérale à base essentiellement de particules de carbonate de calcium ou équivalent ayant un diamètre moyen au plus de 2 microns et jusqu'à de l'ordre de 30% en poids d'une charge de particules compatibles avec celles de carbonate de calcium ou équivalent ayant un diamètre statistique moyen compris entre 5 et 10 microns.

Il doit être entendu que toute matière ou combinaison de matière fonctionnellement équivalente au carbonate de calcium, pour l'application considérée est explicitement incluse dans la description. Une telle matière inclut le sulfate de calcium, de silice, le sulfatebaryum, le carbonate double de calcium et de magnésium (dolomie), le silicate d'aluminium, potassium, sodium, magnésium (feldspath, talc, kaolin). Il doit être entendu que les matières peuvent être utilisées seules ou en mélange.

Un procédé de réalisation de traces sur le sol, qui fait également partie de l'invention, est tel que :

– On applique d'abord sur le sol et selon les traces voulues un tel matériau de traçage ;

– Et on applique également sur le matériau de traçage un matériau à effet lumineux transparent conforme à l'invention.

Toutefois, le matériau a effet lumineux selon l'invention peut avoir d'autres applications.

On décrit maintenant, plus particulièrement, le matériau produisant un effet lumineux conforme à l'invention. Ce matériau se présente sous une forme fluide (plus ou moins liquide ou pâteuse). L'invention concerne aussi bien le matériau brut et stocké que le matériau mis en oeuvre.

On entend par "effet lumineux" le fait que le matériau, une fois appliqué sur un support comportant lui-même dans la réalisation considérée une trace visible en un matériau de marquage, produise un effet visible sensible à la lumière extérieure, notamment celle provenant de projecteurs de lumière. L'effet lumineux dont il s'agit inclut la réflexion lumineuse, la luminescence ou autres effets similaires.

Un tel matériau conforme à l'invention comprend - ou en variante est constitué essentiellement - des constituants suivants :

– Des paillettes ou micro-paillettes d'au moins un matériau apte à produire un effet lumineux choisi dans le groupe comprenant : les résines acrylique - polyester sous forme de film, les mica, les mica-titane, la nacre ou équivalent ;

– Au moins un liant ;

– Au moins un épaississant ;

– Eau.

Plus particulièrement, dans la réalisation considérée, les constituants sont :

– Les paillettes ou micro-paillettes mentionnées, jusqu'à 50% en poids et plus particulièrement de l'ordre de 10% à 20% en poids.

– Un ou plusieurs liants choisis parmi les liants cellulosiques et/ou acryliques, de l'ordre de 2% à 6% en poids environ, notamment égal ou de l'ordre de 3%.

– Un ou plusieurs épaississants notamment choisi dans le groupe comprenant ceux à base d'hydroyéthylcellulose ou équivalent en quantité inférieure à de l'ordre de 11% en poids.

– De l'eau de l'ordre de 15% à 85% en poids et plus spécialement de l'ordre d' environ 80% en poids.

Ces constituants sont sélectionnés qualitativement et quantitativement dans le matériau de telle manière que celui-ci, dans la réalisation considérée soit substantiellement transparent.

Dans la même réalisation considérée, le matériau comprend en outre un ou plusieurs des (ou tous les) constituants suivants :

– Au moins un agent dispersant en quantité inférieure à 3% en poids environ, et plus particulièrement inférieure à 0,5%, tel qu'un sel d'ammonium d'acide acrylique polymère ou équivalent ;

– Au moins un bactéricide tel qu'une solution aqueuse de n-méthylol-chloracétamide et d'hétérocycles actifs ou équivalent.

– Au moins un produit antimousse évitant la formation de bulles lors de la fabrication du matériau ou sa mise en oeuvre. Un produit antimousse convenable est par exemple un mélange de substances hydrophobes dans une huile minérale paraffinique.

– Au moins une base telle que le pH soit ajusté entre 8 et 9,5 environ.

Dans la réalisation considérée, le matériau comprend une combinaison de paillettes de résine acrylique - polyester ou équivalent et de micro-paillettes de mica, mica-titane ou équivalent. Les paillettes de résine acrylique - polyester ou équivalent constituent au moins 60% et préférentiellement 80% en poids du total des paillettes et micro-paillettes.

Le liant est choisi avantageusement dans le groupe comprenant les dispersions de copolymères à base de styrène et d'ester acrylique et les dispersions aqueuses d'un copolymère d'acrylates ou équivalent.

Le matériau comprend avantageusement un ou des épaississant(s) et en outre un ou des agent(s) dispersant(s), et/ou bactéricide(s), et/ou produit(s) antimousse, l'ensemble en quantité inférieure à 12,5% en poids environ.

D'excellents résultats ont été obtenus avec des paillettes calibrées à partir d'un film de résine acrylique - polyester de la marque CRYSTALINA distribuées par la Société OMYA, plus spécialement de la série 300 dont les tailles (en millimètres) vont de 1 x 1 jusqu'à 3 x 3.

De bons résultats ont été obtenus également avec les séries suivantes incluant les nuances suivantes de couleurs : 321 (or), 322 (vert), 323 (bleu), 324 (violet), et parmi celles-ci plus spécialement la série 323 donnant un reflet bleuté.

Exemple 1 :

Un matériau produisant un effet lumineux conforme à l'invention a été réalisé par mélange et dispersion des composants suivants avec les pourcentages en poids indiqués :

1 : Matériaux a effet lumineux :

= paillettes CRYSTALINA 040 : 5%.

= paillettes CRYSTALINA 062 : 5%.

= micro-paillettes de mica nacré : 0,5%.

= paillettes de mica naturel (1 à 4 mm) : 2,0%. soit total : 12,5%

2. Eau : 78,0%.

3. Liant : 3%. MOWILITH DM 611 de la Société HOECHST.

4. Epaississant : 0,5%. NATROSOL 250 HR de la Société AQUALON et 5,0%. VISCOATEX 46 de la Société S.E.P.C.

5. Bactéricide : 0,1%. MERGAL K6N de la Société OMYA.

6. agent dispersant : 0,1%. COATEX P90 de la Société S.E.P.C.

7.Produit antimousse : 0,1%. NOPCO NDW de la Société HENKEL NOPCO.

8. Base : Ammoniaque : 0,7%.

Un matériau de ce type a une densité de 1,0, un pH de 8,5 et une viscosité de 16.5 Pascal seconde.

Exemples 2 :

D'autres réalisations dérivées de celle de l'exemple 1 ont été faites avec d'autres matières premières et d'autres compositions et/ou les mêmes matières premières que celles de l'exemple 1 mais avec d'autres proportions en poids relatives.

Outre les paillettes de CRYSTALINA déjà mentionnées on peut utiliser des paillettes de SARKLE BRITE de la Société ROST ou de mica naturel de la Société CMMP.

En ce qui concerne le liant, on a utilisé également de l'ACRONAL 290D de la Société B.A.S.F. ainsi que du RHODOPAS DS 910 de la Société RHONE-POULENC. La proportion en poids est de l'ordre de 3 à 4%.

Comme épaississant cellulosique, on a utilisé également du TYLOSE MHB 10.000Y de la Société HOECHST ainsi que du BERMOCOLL E320FQ de la Société BEROL CHIMIE.

Comme épaississant acrylique, on a utilisé du VISCOATEX 46 de la Société S.E.P.C., du PRIMAL ASE 60 de la Société ROHM ET HAAS, du LATEKOLL de la Société B.A.S.F.

La proportion en poids du total du ou des épaississants est comprise entre 0,5% et 6% environ.

A la place du MERGAL K6N, on a utilisé également du MERGAL AF de la Société OMYA et du PROXEL XL2 de la Société I.C.I. la proportion en poids est de l'ordre de 0,1%.

A la place du COATEX P90, on a également utilisé de l'OROTAN 731 de la Société ROHM ET HAAS ou encore du Dispersant PIG A de la Société B.A.S.F.

On a également utilisé comme produit antimousse du BYK 033 de la Société B.Y.K. CHEMIE.

A la place de l'ammoniaque on a utilisé également de la soude en solution à 30%.

Les noms qui ont été indiqués précédemment peuvent être des marques déposées.

Exemple 3 :

1. Matériaux à effet lumineux :
    = paillettes CRYSTALINA 035 : 34%.
    = Micro-paillettes de mica nacré : 6%.
2. Eau : 54,9%.
3. Liant : 4%. MOWILITH DM 611.
4. Epaississant : 0,5%. NATROSOL 250 MR.

5. Bactéricide : 0,1%. MERGAL K6 N.
6. Agent dispersant : 0,2%. COATEX P90.
7. Produit antimousse : 0,1%. NOPCO NDW.
8. Base : Ammoniaque : 0,2%.

Ce matériau a une densité de 1,1, un pH de 8,7 et une viscosité de 25 Pascal seconde.

Exemple 4 :

1. Matériaux à effet lumineux :
    = paillettes CRYSTALINA 062 : 10%.
    = Micro-paillettes de mica nacré : 0,5%.
2. Eau : 84,9%.
3. Liant : 3%. MOWILITH DM 611.
4. Epaississant : 1%. NATROSOL 250 MR.
5. Bactéricide : 0,2%. MERGAL AF.
6. Agent dispersant : 0,1%. COATEX P90.
7. Produit antimousse : 0,1%. BYK 033.
8. Base : Ammoniaque : 0,2%.

Ce matériau a une densité de 1,0, un pH de 8,5 et une viscosité de 14 Pascal seconde.

**Revendications**

1. Matériau produisant un effet lumineux, comprenant:

    – des paillettes ou micro-paillettes d'au moins un matériau apte à produire un effet lumineux choisi dans le groupe comprenant : les résines acrylique - polyester sous forme de film, les mica, les mica-titane, la nacre ou équivalent ;

    – au moins un liant cellulosique, acrylique ou équivalent ;

    – au moins un épaississant ;

    – de l'eau ;

les constituants étant sélectionnés pour que le matériau soit substantiellement transparent.

2. Matériau selon la revendication 1, caractérisé par le fait qu'il comprend au moins un agent dispersant en quantité inférieure à 3% en poids.

3. Matériau selon la revendication 1, caractérisé par le fait qu'il comprend au moins un bactéricide, et/ou au moins un produit antimousse.

4. Matériau selon la revendication 1, caractérisé par le fait qu'il comprend au moins une base telle que le pH soit ajusté entre 8 et 9,5 environ.

5. Matériau selon la revendication 1, caractérisé par le fait qu'il comprend une combinaison de paillettes de résine acrylique - polyester ou équivalent et de micro-paillettes de mica, mica-titane ou équivalent.

6. Matériau selon la revendication 1, caractérisé par le fait qu'il comprend jusqu'à 50%, et, plus spécialement de l'ordre de 10% à 20% en poids de paillettes ou micro-paillettes à effet lumineux.

7. Matériau selon la revendication 1, caractérisé par le fait qu'il comprend principalement des paillettes de résine acrylique - polyester ou équivalent, celles-ci constituant au moins 60% et préférentiellement de l'ordre de 80% en poids du total des paillettes et micro-paillettes à effet lumineux.

8. Matériau selon la revendication 1, caractérisé par le fait qu'il comprend de 15% à 85% et, plus spécialement de l'ordre de 80% environ en poids d'eau.

9. Matériau selon la revendication 1, caractérisé par le fait qu'un liant est choisi dans le groupe comprenant et les dispersions de copolymères à base de styrène et d'ester acrylique et les dispersions aqueuses d'un copolymère d'acrylates ou équivalent.

10. Matériau selon la revendication 1 caractérisé par le fait qu'il comprend un ou des agent(s) dispersant(s), et/ou bactéricides(s), et/ou produit(s) antimousse, l'ensemble avec le ou les épaississants étant en quantité inférieure à 12,5% en poids environ.

11. Matériau selon la revendication 1, caractérisé par le fait qu'il comprend un liant de 2% à 6% en poids environ.

12. Matériau selon la revendication 1, caractérisé par le fait qu'un épaississant est choisi dans le groupe comprenant ceux à base d'hydroxyéthylcellulose ou équivalent.

13. Matériau selon la revendication 1, caractérisé par le fait que l'épaississant est en quantité inférieure à 11% en poids environ.

14. Matériau selon la revendication 1 caractérisé par le fait qu'il comprend au moins un agent dispersant choisi tel qu'un sel d'ammonium d'acide acrylique polymère ou équivalent.

15. Matériau selon la revendication 1 caractérisé par le fait qu'il comprend au moins un bactéricide tel qu'une solution aqueuse de n-méthylol-chloracétamide et d'hétérocycles actifs ou équivalent.

16. Combinaison d'au moins un matériau de traçage du sol et d'au moins un matériau produisant un effet lumineux selon la revendication 1.

17. Combinaison selon la revendication 16, caractérisée par le fait que le matériau de traçage du sol comprend de 20% à 70% en poids d'une suspension aqueuse de charge minérale à base essentiellement de particules de carbonate de calcium et/ou équivalent dont au moins une partie notable de celles-ci a un diamètre statistique moyen au plus de l'ordre de 2 microns et une charge de particules compatibles avec celles du carbonate de calcium et/ou équivalent et dont au moins une partie notable de celles-ci a un diamètre statistique moyen au moins de l'ordre de 5 microns.

18. Combinaison selon la revendication 16, caractérisée par le fait que le matériau de traçage du sol comprend de l'ordre de 50% à 70% en poids d'une suspension aqueuse de charge minérale à base essentiellement de particules de carbonate de calcium et/ou équivalent ayant un diamètre moyen au plus de 2 microns et jusqu'à de l'ordre de 20% en poids d'une charge de particules compatibles avec celles du carbonate de calcium et/ou équivalent ayant un diamètre statistique moyen compris entre 9 et 10 microns.

19. Procédé de réalisation de traces sur le sol dans lequel :
    – on applique d'abord, sur le sol et selon les traces voulues, un matériau de traçage ;
    – et on applique également sur le matériau de traçage un matériau à effet lumineux transparent selon la revendication 1.

Office européen
des brevets

**RAPPORT DE RECHERCHE EUROPEENNE**

Numero de la demande

EP 91 40 2139

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 004 930 (C.F. TUNG) * Colonne 4, lignes 64-68; colonne 5, lignes 1-5,18-24; revendications 1,5,6 * | 1 | C 09 D 5/00 G 02 B 5/12 E 01 F 9/04 |
| | --- | | |
| Y | DATABASE WPIL, accession no. 84-078798 [13], Derwent Publications Ltd, Londres, GB; & JP-A-59 030 868 (HAYASHI KAGAKU KOGY) 18-02-1982 * résumé * | 1 | |
| | --- | | |
| A | DE-A-2 908 909 (G. EBERT) ----- | | |

**DOMAINES TECHNIQUES RECHERCHES (Int. Cl.5)**

C 09 D
G 02 B
E 01 F

Le présent rapport a été établi pour toutes les revendications

| Lieu de la recherche | Date d'achèvement de la recherche | Examinateur |
|---|---|---|
| LA HAYE | 07-11-1991 | BUSCAGLIONE Y. |

EPO FORM 1503 03.82 (P0402)